# EUROPEAN PATENT APPLICATION

(11) **EP 4 745 193 A1**
(43) Date of publication of application: **20.05.2026**
(21) Application number: 24839668.1
(22) Date of filing: 05.07.2024
(51) Int. Cl.: C08L 83/04, C08K 3/013, C08K 5/10, C08K 5/5415, C09D 183/04, C09J 183/04, C09K 3/10

(54) **ROOM-TEMPERATURE-CURABLE RESIN COMPOSITION AND ARTICLE**

(30) Priority: 10.07.2023 JP 2023113213
(71) Applicant: SHIN-ETSU CHEMICAL CO., LTD., Tokyo 100-0005 (JP)
(72) Inventor: KATAYAMA Taiki, Annaka-shi, Gunma 379-0224 (JP)
(74) Representative: Mewburn Ellis LLP
(86) International application number: PCT/JP2024/024379
(87) International publication number: WO 2025/013776

(57) **Abstract**

The room-temperature-curable resin composition contains an organosilicon compound represented by formula (1) and yields a highly strengthened cured product. 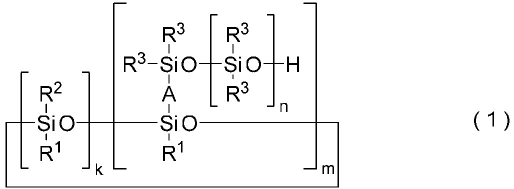 (In the formula, R¹ independently represent a substituted or unsubstituted monovalent C1-12 hydrocarbon group, excluding aliphatic unsaturated bonds; R² represents a hydrogen atom or an aliphatic unsaturated monovalent C2-12 hydrocarbon group; R³ independently represent a substituted or unsubstituted monovalent C1-12 hydrocarbon group, excluding aliphatic unsaturated bonds; A represents a divalent C2-8 hydrocarbon group; k represents an integer of 0-2; m represents an integer of 3-6; k+m represents an integer of 3-8; and n represents an integer of 0-100.)

## Description

### TECHNICAL FIELD

This invention relates to a room temperature (RT) curable resin composition which forms a cured product having a higher strength, and more particularly, to a RT-curable resin composition (i.e., RT-curable organopolysiloxane composition) comprising a curable organopolysiloxane as a main component or base polymer and an organosilicon compound of specific molecular structure (i.e., silanol group-containing polyfunctional cyclic organopolysiloxane compound) as a strengthening agent, which gives an organopolysiloxane elastomer (i.e., silicone rubber cured product) having an improved tensile strength and bond strength, and a coating agent, adhesive agent and sealing agent comprising the composition, as well as an article coated, bonded or sealed with a cured product of the composition.

### BACKGROUND ART

As the RT-curable resin composition adapted to crosslink and cure through condensation reaction at room temperature (23°C±15°C) with airborne water (or moisture) into an elastomer (i.e., rubber cured product), RT-curable organopolysiloxane compositions of condensation cure type are known from the past. The RT-curable organopolysiloxane compositions are widely used in the building, transportation, and electric/electronic part fields because of their safety and superior durability and adhesion as rubber. In particular, the tensile strength and bond strength of cured products are often considered important because they largely govern the reliability of members to which the cured products are applied.

Of the RT-curable organopolysiloxane compositions, RT-curable organopolysiloxane compositions of so-called one-package type (or one part type) are widely used as elastic adhesive agents and coating agents in the electric/electronic industry and as sealing agents in the building industry. This is because they eliminate cumbersome steps of metering and mixing a base polymer, crosslinker, catalyst and the like immediately before use and hence, avoid any errors in blending, and often achieve satisfactory adhesion to a wide variety of substrates even when primers are not applied.

The RT-curable organopolysiloxane compositions of one-package type are generally divided in terms of the type of compound which is released from the composition upon contact with airborne water. Typical are organopolysiloxane compositions of deacetic acid, deoximation, deamidation, dehydroxylamination, deacetonation and dealcoholization types. Among others, the organopolysiloxane composition of deoximation type which cures while releasing oxime has advantages including storage stability and formation of a satisfactory cured coating within a short time; the organopolysiloxane composition of dealcoholization type which cures while releasing alcohol has advantages including least odor, no corrosion of metals such as copper and iron, excellent self-adhesion (i.e., adhesion after cure to a variety of substrates without using primers), and bond durability. They are used in the field where their advantages are useful.

However, the RT-curable organopolysiloxane compositions of one-package type are generally known to be low in the tensile strength and bond strength of cured products.

As the means for enhancing the tensile strength and bond strength of cured products of RT-curable organopolysiloxane compositions of one-package type, it is known from the past (Non-Patent Document 1) to add fillers such as silica and colloidal calcium carbonate.

The fillers, however, give rise to problems that if the addition amount is increased too much, the composition experiences a large viscosity buildup and loses workability on use. There is the demand for another enhancement means.

### PRIOR ART DOCUMENT

### NON-PATENT DOCUMENT

Non-Patent Document 1: Kunio Ito, "Silicone Handbook," Nikkan Kogyo Shinbun, 1990

### SUMMARY OF INVENTION

### TECHNICAL PROBLEM

An object of the invention, which has been made under the above-mentioned circumstances, is to provide a RT-curable resin composition (i.e., RT-curable organopolysiloxane composition) which gives a cured product having a higher strength, especially an organopolysiloxane elastomer (i.e., silicone rubber cured product) having improved tensile strength and bond strength, and a coating agent, adhesive agent and sealing agent comprising the composition, as well as an article coated, bonded or sealed with a cured product of the composition.

### SOLUTION TO PROBLEM

Making extensive investigations to attain the above object, the inventors have found that by blending an organosilicon compound having the formula (1) in a RT-curable resin composition as a strengthening agent, the composition is improved in tensile strength and bond strength of its cured product. The invention is predicated on this finding.

Accordingly, the invention provides a RT-curable resin composition, a coating agent, adhesive agent and sealing agent, and an article coated, bonded or sealed with a cured product of the composition, as defined below.
[1] A RT-curable resin composition comprising an organosilicon compound having the formula (1): 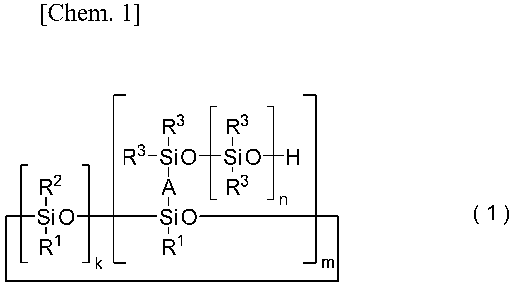 wherein R¹ is independently a C₁-C₁₂ substituted or unsubstituted, monovalent hydrocarbon group free of an aliphatic unsaturated bond, R² is hydrogen or a C₂-C₁₂ aliphatic unsaturated monovalent hydrocarbon group, R³ is independently a C₁-C₁₂ substituted or unsubstituted, monovalent hydrocarbon group free of an aliphatic unsaturated bond, A is a C₂-C₈ divalent hydrocarbon group, k is an integer of 0 to 2, m is an integer of 3 to 6, k+m is an integer of 3 to 8, and n is an integer of 0 to 100.
[2] The RT-curable resin composition of [1], comprising a curable organopolysiloxane.
[3] The RT-curable resin composition of [2], comprising the following components (A) to (D):
   (A) 0.01 to 50 parts by weight of the organosilicon compound having formula (1),
   (B) 100 parts by weight of a curable organopolysiloxane,
   (C) 0.1 to 30 parts by weight of a hydrolyzable organosilane compound and/or a partial hydrolytic condensate thereof, other than components (A) and (B), and
   (D) 0.01 to 15 parts by weight of a curing catalyst.
[4] The RT-curable resin composition of [3], further comprising, per 100 parts by weight of component (B), at least one component selected from the following components (E) to (G):
   (E) 1 to 1,000 parts by weight of a filler,
   (F) 1 to 30 parts by weight of an adhesion promoter, and
   (G) 1 to 1,000 parts by weight of a plasticizer.
[5] A coating agent comprising the RT-curable resin composition of any one of [1] to [4].
[6] An adhesive agent comprising the RT-curable resin composition of any one of [1] to [4].
[7] A sealing agent comprising the RT-curable resin composition of any one of [1] to [4].
[8] An article having a coating layer comprising a cured product of the RT-curable resin composition of any one of [1] to [4].
[9] An article bonded and/or sealed with a cured product of the RT-curable resin composition of any one of [1] to [4].

In the practice of the invention, the organosilicon compound defined herein encompasses an aggregate of organosilicon compounds, even though individual organosilicon compounds have different structures, as long as the average structure of the aggregate falls in the above-defined range.

### ADVANTAGEOUS EFFECTS OF INVENTION

By blending an organosilicon compound having a specific molecular structure (i.e., silanol-containing polyfunctional cyclic organopolysiloxane compound) as a strengthening agent, there is obtained a RT-curable resin composition which gives a cured product having improved tensile strength and bond strength.

### DESCRIPTION OF EMBODIMENTS

Now the invention is described in detail.

The invention provides a RT-curable resin composition comprising component (A): an organosilicon compound (i.e., silanol-containing polyfunctional cyclic organopolysiloxane compound) as a strengthening agent.

The RT-curable resin composition is a RT-curable organopolysiloxane composition comprising (A) an organosilicon compound and (B) a curable organopolysiloxane as a main component or base polymer, as defined below (i.e., so-called RTV silicone rubber composition of condensation cure type), more specifically a RT-curable organopolysiloxane composition of condensation cure type comprising components (A), (B), (C) and (D) as defined below and optionally, at least one component selected from components (E), (F) and (G) as defined below.

Component (A) is an organosilicon compound having the formula (1) which serves as a strengthening agent for the RT-curable resin composition.

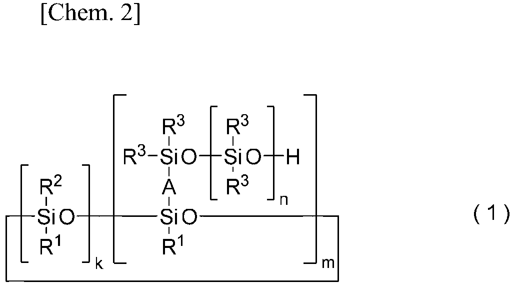

Herein, R¹ is independently a C₁-C₁₂ substituted or unsubstituted, monovalent hydrocarbon group free of an aliphatic unsaturated bond, R² is hydrogen or a C₂-C₁₂ aliphatic unsaturated monovalent hydrocarbon group, R³ is independently a C₁-C₁₂ substituted or unsubstituted, monovalent hydrocarbon group free of an aliphatic unsaturated bond, A is a C₂-C₈ divalent hydrocarbon group, k is an integer of 0 to 2, m is an integer of 3 to 6, k+m is an integer of 3 to 8, and n is an integer of 0 to 100.

Component (A) is an organosilicon compound (i.e., cyclic organopolysiloxane compound), that is, a silanol-containing polyfunctional cyclic organopolysiloxane compound composed of 3 to 8 (i.e., (k+m) number of) siloxane units and having 3 to 6 (i.e., m number of) monovalent organosiloxanyl groups having a diorganohydroxysilyl group or a silanol group (silicon-bonded hydroxy group) at the end, via a divalent hydrocarbon group "A", as a monovalent substituent (side chain) bonded to a silicon atom in the cyclic organopolysiloxane.

In formula (1), R¹ is a C₁-C₁₂ substituted or unsubstituted, monovalent hydrocarbon group free of an aliphatic unsaturated bond, examples of which include alkyl groups such as methyl, ethyl, propyl, isopropyl, butyl, isobutyl, tert-butyl, pentyl, hexyl, heptyl, octyl, 2-ethylhexyl, nonyl, decyl and dodecyl; cycloalkyl groups such as cyclopentyl and cyclohexyl; aryl groups such as phenyl, tolyl, xylyl, α-naphthyl and β-naphthyl; aralkyl groups such as benzyl, 2-phenylethyl and 3-phenylpropyl; and the foregoing groups in which some or all hydrogen is substituted by halogen (e.g., F, Cl or Br) or cyano, such as 3-chloropropyl, 3,3,3-trifluoropropyl and 2-cyanoethyl. Inter alia, R¹ is preferably selected from lower alkyl groups such as methyl, ethyl, isopropyl, and butyl, and aryl groups such as phenyl, more preferably methyl and phenyl.

In formula (1), R² is hydrogen or a C₂-C₁₂ aliphatic unsaturated monovalent hydrocarbon group. Examples of the C₂-C₁₂ aliphatic unsaturated monovalent hydrocarbon group include alkenyl groups such as vinyl, allyl, propenyl, isopropenyl, butenyl, isobutenyl, pentenyl, hexenyl, and cyclohexenyl; and alkynyl groups such as ethynyl (or acetylenyl) and ethynylmethyl. Inter alia, R² is preferably selected from hydrogen and alkenyl groups such as vinyl and allyl, more preferably hydrogen and vinyl.

In formula (1), R³ is independently a C₁-C₁₂ substituted or unsubstituted, monovalent hydrocarbon group free of an aliphatic unsaturated bond, examples of which are as exemplified above for R¹, and specifically include alkyl groups such as methyl, ethyl, propyl, isopropyl, butyl, isobutyl, tert-butyl, pentyl, hexyl, heptyl, octyl, 2-ethylhexyl, nonyl, decyl and dodecyl; cycloalkyl groups such as cyclopentyl and cyclohexyl; aryl groups such as phenyl, tolyl, xylyl, α-naphthyl and β-naphthyl; aralkyl groups such as benzyl, 2-phenylethyl and 3-phenylpropyl; and the foregoing groups in which some or all hydrogen is substituted by halogen (e.g., F, Cl or Br) or cyano, such as 3-chloropropyl, 3,3,3-trifluoropropyl and 2-cyanoethyl. Inter alia, R³ is preferably selected from lower alkyl groups such as methyl, ethyl, isopropyl, and butyl, and aryl groups such as phenyl, more preferably methyl and phenyl.

In formula (1), "A" is selected from C₂-C₈, preferably C₂-C₄ divalent hydrocarbon groups such as alkylene and alkenylene groups. The preferred divalent hydrocarbon groups are alkylene groups such as -(CH₂)ₚ- wherein p is an integer of 2 to 8, preferably 2 to 4. Of these, -CH₂CH₂- and -CH₂CH₂CH₂- are more preferred.

In formula (1), k is an integer of 0 to 2, preferably 0 or 1.

In formula (1), m is an integer of 3 to 6, preferably 4 or 5.

In formula (1), k+m is an integer of 3 to 8, preferably 4 to 6.

In formula (1), n is an integer of 0 to 100, preferably 0 to 20, more preferably 0 to 10, even more preferably 0 to 4.

### <Method for preparing organosilicon compound>

The organosilicon compound having formula (1) can be prepared by a method comprising step [I] or [II]:
Step [I] of performing hydrosilation addition reaction of an organohydrogensilane or organohydrogenpolysiloxane having the formula (2): 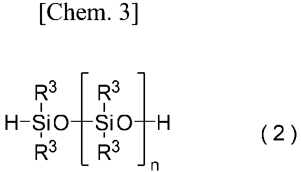
   wherein R³ and n are as defined above, with a cyclic organopolysiloxane having the formula (3): 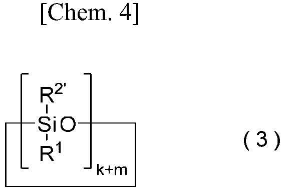
   wherein R¹, k, m and k+m are as defined above and R^{2'} is a C₂-C₁₂ aliphatic unsaturated monovalent hydrocarbon group, in the presence of a platinum compound-containing catalyst, or
step (II) of performing hydrosilation addition reaction of an organosilane or organopolysiloxane having the formula (4): 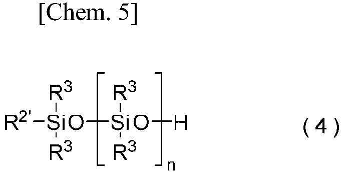
   wherein R³ and n are as defined above and R^{2'} is a C₂-C₁₂ aliphatic unsaturated monovalent hydrocarbon group, with a cyclic organohydrogenpolysiloxane having the formula (5): 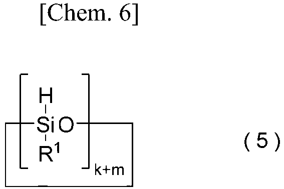
   wherein R¹, k, m and k+m are as defined above, in the presence of a platinum compound-containing catalyst.

Specifically, an organohydrogensilane having a silanol group (i.e., silicon-bonded hydroxyl group) and a silicon-bonded hydrogen (i.e., hydrosilyl group represented by SiH) in the molecule, represented by formula (2) wherein n=0, or an organohydrogenpolysiloxane having a silanol group at one end of the molecular chain and a silicon-bonded hydrogen at the other end of the molecular chain, represented by formula (2) wherein n is 1 to 100, and a cyclic organopolysiloxane having an aliphatic unsaturated monovalent hydrocarbon group (R^{2'}) such as alkenyl or alkynyl, represented by formula (3), are subjected to hydrosilation addition reaction in the presence of a platinum compound-containing catalyst. Alternatively, an organosilane having a silanol group and an aliphatic unsaturated monovalent hydrocarbon group (R^{2'}) such as alkenyl or alkynyl in the molecule, represented by formula (4) wherein n=0, or an organopolysiloxane having an aliphatic unsaturated monovalent hydrocarbon group (R^{2'}) such as alkenyl or alkynyl at one end of the molecular chain and a silanol group at the other end of the molecular chain, represented by formula (4) wherein n is 1 to 100, and a cyclic organohydrogenpolysiloxane having a silicon-bonded hydrogen, represented by formula (5), are subjected to hydrosilation addition reaction in the presence of a platinum compound-containing catalyst. By adding the silicon-bonded hydrogen (SiH group) to the aliphatic unsaturated monovalent hydrocarbon group (R^{2'}) such as alkenyl or alkynyl to form a carbon-silicon bond, that is, by effecting addition reaction of the silicon-bonded hydrogen (SiH group) in formula (2) with the aliphatic unsaturated monovalent hydrocarbon group (R^{2'}) such as alkenyl or alkynyl in formula (3), or addition reaction of the silicon-bonded hydrogen (SiH group) in formula (5) with the aliphatic unsaturated monovalent hydrocarbon group (R^{2'}) such as alkenyl or alkynyl in formula (4), to form the divalent hydrocarbon group such as alkylene and/or alkenylene, represented by "A" in formula (1), the organosilicon compound having formula (1) is prepared.

In formulae (3) and (4), exemplary of the C₂-C₁₂ aliphatic unsaturated monovalent hydrocarbon group, represented by R^{2'}, are those exemplified above for the C₂-C₁₂ aliphatic unsaturated monovalent hydrocarbon group included in R² in formula (1). R^{2'} is preferably an alkenyl group such as vinyl or allyl, most preferably vinyl.

Examples of the organohydrogensilane or organohydrogenpolysiloxane having formula (2) are shown below.

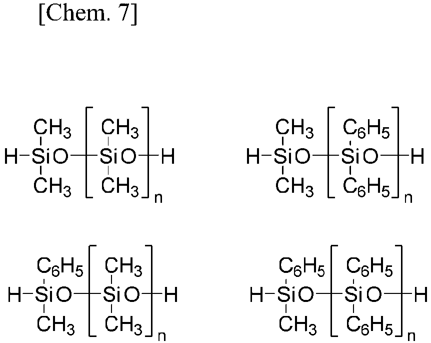

Herein n is as defined above.

Examples of the cyclic organopolysiloxane having formula (3) are shown below.

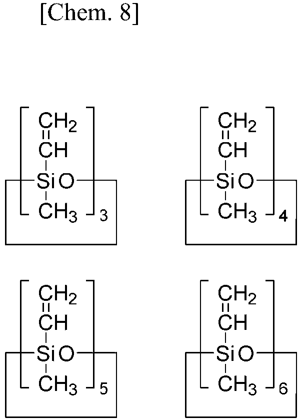

Examples of the organosilane or organopolysiloxane having formula (4) are shown below.

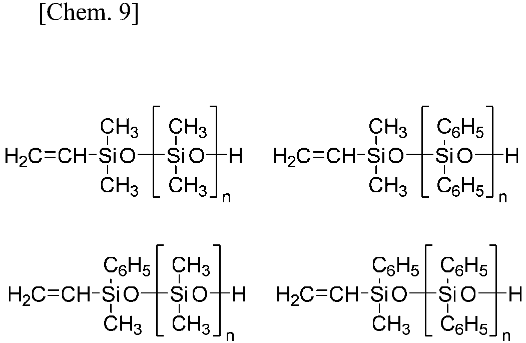

Herein n is as defined above.

Examples of the cyclic organohydrogenpolysiloxane having formula (5) are shown below.

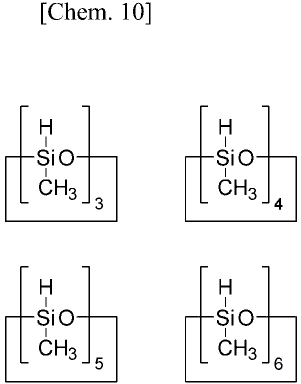

The organohydrogensilane or organohydrogenpolysiloxane having formula (2) and the cyclic organopolysiloxane having formula (3) are preferably used in such a proportion that 0.5 to 1.5 mol, more preferably 0.7 to 1.4 mol of aliphatic unsaturated monovalent hydrocarbon group such as alkenyl or alkynyl in the cyclic organopolysiloxane having formula (3) is available per mol of hydrosilyl group (SiH group) in the organohydrogensilane or organohydrogenpolysiloxane having formula (2), when it is taken into account to inhibit formation of by-products during hydrosilation addition reaction and to enhance the storage stability and properties of the resulting organosilicon compound.

Also, the organosilane or organopolysiloxane having formula (4) and the cyclic organohydrogenpolysiloxane having formula (5) are preferably used in such a proportion that 0.5 to 1.5 mol, more preferably 0.7 to 1.4 mol of aliphatic unsaturated monovalent hydrocarbon group such as alkenyl or alkynyl in the organosilane or organopolysiloxane having formula (4) is available per mol of hydrosilyl group (SiH group) in the cyclic organohydrogenpolysiloxane having formula (5), when it is taken into account to inhibit formation of by-products during hydrosilation addition reaction and to enhance the storage stability and properties of the resulting organosilicon compound.

The platinum compound-containing catalyst used in the hydrosilation addition reaction is not particularly limited. Examples thereof include chloroplatinic acid, alcohol solutions of chloroplatinic acid, toluene or xylene solutions of platinum/1,3-divinyl-1,1,3,3-tetramethyldisiloxane complex, tetrakistriphenylphosphine platinum, dichlorobistriphenylphosphine platinum, dichlorobisacetonitrile platinum, dichlorobisbenzonitrile platinum, dichlorocyclooctadiene platinum, and supported catalysts such as platinum on carbon, platinum on alumina and platinum on silica. Inter alia, the toluene or xylene solutions of platinum/1,3-divinyl-1,1,3,3-tetramethyldisiloxane complex are preferred in view of the regioselectivity of hydrosilation addition reaction.

Although the amount of the platinum compound-containing catalyst used is not particularly limited, it is preferred from the aspects of reactivity and productivity to use the catalyst in such an amount as to provide 1×10⁻⁷ to 1×10⁻² mol, more preferably 1×10⁻⁷ to 1×10⁻³ mol of platinum atom per mol of the organosilane or organopolysiloxane compound having an aliphatic unsaturated monovalent hydrocarbon group such as alkenyl or alkynyl, represented by formula (3) or (4).

Also, a co-catalyst may be used in order to enhance the reactivity of hydrosilation addition reaction. Although the co-catalyst may be any of co-catalysts commonly used in hydrosilation addition reaction, preference is given to ammonium salts of mineral acids, acid amides and carboxylic acids.

Examples of the ammonium salts of mineral acids include ammonium chloride, ammonium sulfate, ammonium amidesulfate, ammonium nitrate, ammonium dihydrogenphosphate, diammonium hydrogenphosphate, triammonium phosphate, ammonium diphosphite, ammonium carbonate, ammonium hydrogencarbonate, ammonium sulfide, ammonium borate, and ammonium borofluoride. Inter alia, ammonium carbonate and ammonium hydrogencarbonate are preferred.

Examples of the acid amides include formamide, acetamide, N-methylacetamide, N,N-dimethylacetamide, propionamide, acrylamide, malonamide, succinamide, maleamide, fumaramide, benzamide, phthalamide, palmitic amide, and stearic amide. Inter alia, formamide and stearic amide are preferred.

Examples of the carboxylic acids include formic acid, acetic acid, propionic acid, butyric acid, methoxyacetic acid, pentanoic acid, caproic acid, heptanoic acid, octanoic acid, lactic acid, glycolic acid, trifluoroacetic acid, maleic acid, fumaric acid, succinic acid, tartaric acid, and oxalic acid. Inter alia, formic acid, acetic acid, lactic acid, maleic acid, fumaric acid, succinic acid and trifluoroacetic acid are preferred, with acetic acid and trifluoroacetic acid being more preferred.

Although the amount of the co-catalyst used is not particularly limited, it is preferred from the aspects of reactivity and regioselectivity of hydrosilation addition reaction and cost to use 1×10⁻⁵ to 1×10⁻¹ mol, more preferably 1×10⁻⁴ to 5×10⁻¹ mol of the co-catalyst per mol of the organosilane or organopolysiloxane compound having an aliphatic unsaturated monovalent hydrocarbon group such as alkenyl or alkynyl, represented by formula (3) or (4).

Although hydrosilation addition reaction takes place in a solventless system, a solvent may be used. Examples of the solvent used include hydrocarbon solvents such as pentane, hexane, cyclohexane, heptane, isooctane, benzene, toluene, and xylene; ether solvents such as diethyl ether,, tetrahydrofuran and dioxane; ester solvents such as ethyl acetate and butyl acetate; aprotic polar solvents such as N,N-dimethylformamide; and chlorinated hydrocarbon solvents such as dichloromethane and chloroform. The solvents may be used alone or in admixture.

Although the amount of the solvent used is not particularly limited, it is preferred from the aspect of productivity, specifically production efficiency to use 0 to 1,000 parts by weight, more preferably 0 to 300 parts by weight of the solvent per 100 parts by weight in total of the organosilane or organopolysiloxane compound having an aliphatic unsaturated monovalent hydrocarbon group such as alkenyl or alkynyl, represented by formula (3) or (4) and the organosilane or organopolysiloxane compound having a silicon-bonded hydrogen atom, represented by formula (2) or (5).

Although the temperature of hydrosilation addition reaction is not particularly limited, the reaction may be carried out at RT (23°C±15°C) to elevated temperature, preferably at RT (23°C±15°C) to 200°C. The reaction at elevated temperature is more preferred to achieve an appropriate reaction rate. In the reaction at elevated temperature, the temperature is preferably 40 to 110°C, more preferably 40 to 90°C. Also, the reaction time is not particularly limited. The time is preferably 1 to 60 hours, more preferably 1 to 30 hours, even more preferably 1 to 20 hours.

In this way, the compound having formula (1) is obtained. Suitable compounds include those having the following formulae, but are not limited thereto.

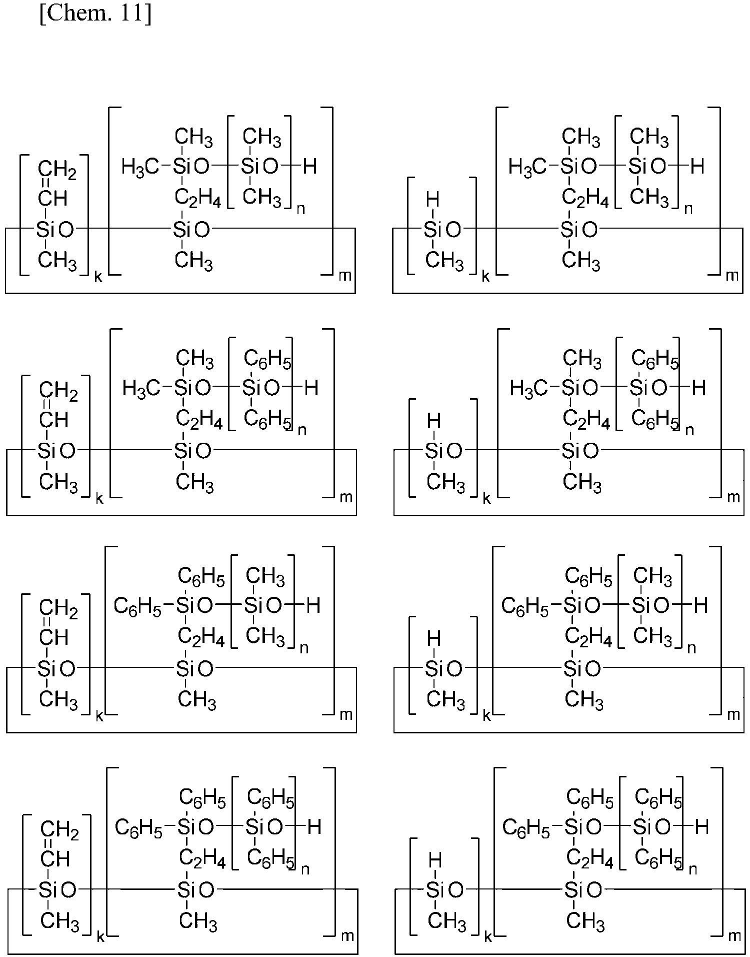

Herein k is an integer of 0 to 2, m is an integer of 3 to 6, k+m is an integer of 3 to 8, and n is an integer of 0 to 100.

Illustrative examples of the compound having formula (1) are shown below, but not limited thereto.

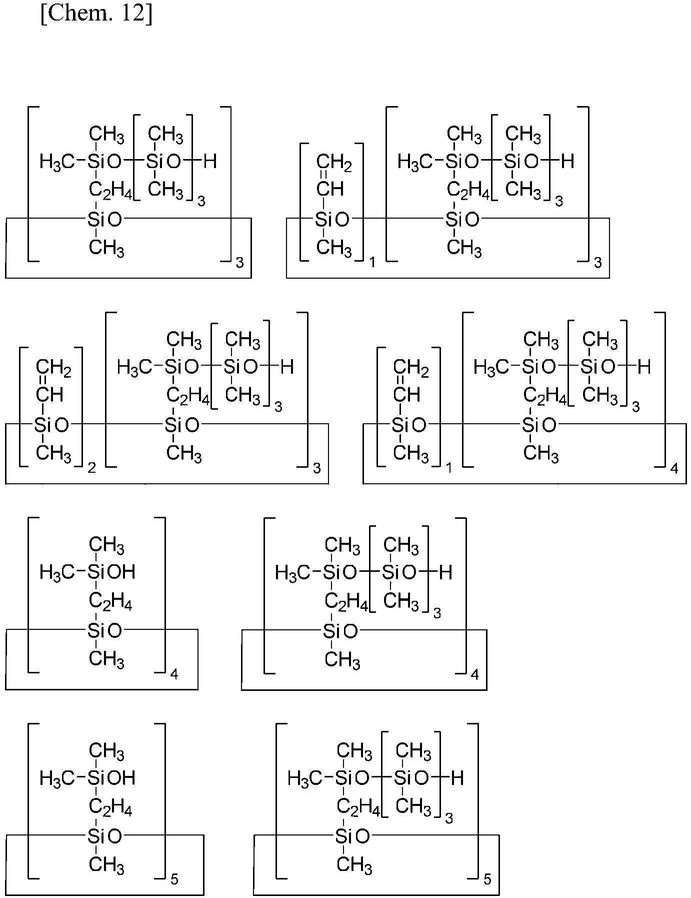

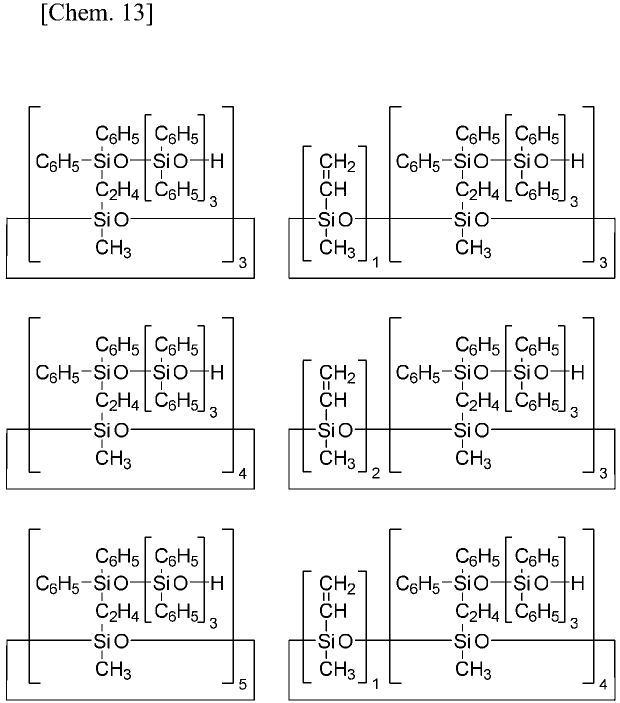

The amount of component (A) blended is preferably 0.01 to 50 parts by weight, more preferably 0.1 to 10 parts by weight per 100 parts by weight of the main component or base polymer, specifically component (B). If the amount is less than 0.01 part by weight, the resulting cured product sometimes fails to exert a strengthening effect (i.e., effect of enhancing tensile strength or shear bond strength to substrates). If the amount exceeds 50 parts by weight, there may arise the problems of too hard cured products and economical loss.

Component (B) is a curable organopolysiloxane which serves as a main component or base polymer in the RT-curable resin composition. The organopolysiloxane has at least one silicon-bonded hydroxy group (silanol group) or hydrolyzable silyl group in the molecule. Used as the organopolysiloxane are diorganopolysiloxanes which are capped with a silicon-bonded hydroxy group (silanol group) or hydrolyzable silyl group at both ends or one end of the molecular chain, represented by the general formulae (6) to (9). Inter alia, diorganopolysiloxanes which are capped with a silicon-bonded hydroxy group at both ends or one end of the molecular chain are especially preferred.

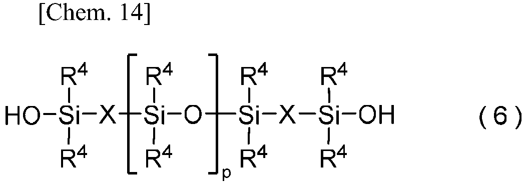

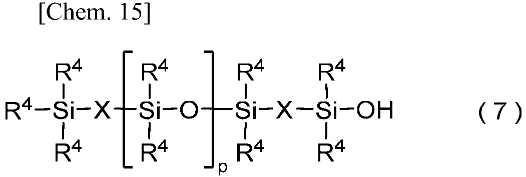

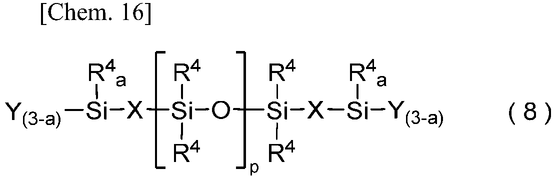

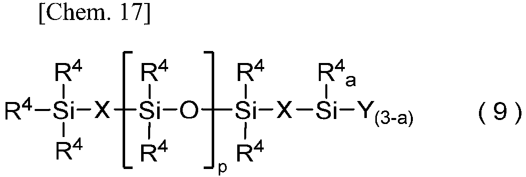

Herein, R⁴ is independently a C₁-C₁₂ substituted or unsubstituted, monovalent hydrocarbon group, X is oxygen or a C₁-C₈ divalent hydrocarbon group, Y is independently a hydrolyzable group, a is 0 or 1, and p is such a number that the diorganopolysiloxane may have a viscosity at 23°C of 100 to 1,000,000 mPa·s.

In formulae (6) to (9), examples of the C₁-C₁₂ substituted or unsubstituted, monovalent hydrocarbon group, represented by R⁴, which are preferably free of an aliphatic unsaturated bond, include alkyl groups such as methyl, ethyl, propyl, isopropyl, butyl, isobutyl, tert-butyl, pentyl, hexyl, heptyl, octyl, 2-ethylhexyl, nonyl, decyl and dodecyl; cycloalkyl groups such as cyclopentyl and cyclohexyl; aryl groups such as phenyl, tolyl, xylyl, α-naphthyl and β-naphthyl; aralkyl groups such as benzyl, 2-phenylethyl and 3-phenylpropyl; and the foregoing groups in which some or all hydrogen is substituted by halogen (e.g., F, Cl or Br), cyano or the like, such as 3-chloropropyl, 3,3,3-trifluoropropyl and 2-cyanoethyl. Among these, R⁴ is preferably a lower alkyl group such as methyl, ethyl, isopropyl or butyl, or aryl group such as phenyl, with methyl being most preferred.

In formulae (6) to (9), X is oxygen or a C₁-C₈ divalent hydrocarbon group, preferably group having the formula: -(CH₂CH₂)_{q}- or -(CH=CH)_{q}- wherein q is 1 to 4. Inter alia, oxygen, -CH₂CH₂- and -CH=CH- are preferred.

In formulae (8) and (9), Y is a hydrolyzable group, examples of which include alkoxy groups such as methoxy, ethoxy and propoxy; alkoxyalkoxy groups such as methoxyethoxy, ethoxyethoxy and methoxypropoxy; acyloxy groups such as acetoxy, octanoyloxy and benzoyloxy; alkenyloxy groups such as vinyloxy, isopropenoxy and 1-ethyl-2-methylvinyloxy; ketoxime groups such as dimethylketoxime, methylethylketoxime, and diethylketoxime; amino groups such as dimethylamino, diethylamino, butylamino and cyclohexylamino; aminoxy groups such as dimethyhlaminoxy and diethylaminoxy; and amide groups such as N-methylacetamide, N-ethylacetamide and N-methylbenzamide. Inter alia, alkoxy groups are preferred.

The organopolysiloxane (B) should preferably have a viscosity at 23°C of 100 to 1,000,000 mPa·s, more preferably 300 to 500,000 mPa·s, even more preferably 500 to 100,000 mPa·s, most preferably 1,000 to 80,000 mPa·s. As long as the viscosity of the organopolysiloxane is at least 100 mPa·s, a coating film having excellent physical and mechanical strength is obtainable. As long as the viscosity is up to 1,000,000 mPa·s, it is unlikely that the RT-curable resin composition has so high a viscosity as to detract from workability on use. Notably, the viscosity is measured by a rotational viscometer, e.g., BL, BH, BS or cone plate type viscometer.

In formulae (6) to (9), p indicative of the number of repeating difunctional diorganosiloxane units (SiR⁴₂O_{2/2}) of which the backbone is composed (i.e., degree of polymerization) is typically an integer of at least 50, preferably an integer of 100 to 2,000, more preferably 150 to 1,000, even more preferably 200 to 800.

Herein, the degree of polymerization (or molecular weight) can be determined, for example, as a number average degree of polymerization (or number average molecular weight) by gel permeation chromatography (GPC) versus polystyrene standards using toluene or tetrahydrofuran (THF) as developing solvent.

The organopolysiloxane as component (B) may be used alone or in a mixture of two or more compounds having different structures and molecular weights.

Component (C) is a hydrolyzable organosilane compound and/or partial hydrolytic condensate thereof other than components (A) and (B), and serves as a curing agent or crosslinker in the RT-curable resin composition of the invention. Examples of the hydrolyzable group in the hydrolyzable organosilane compound (C) include ketoxime, alkoxy, acyloxy, alkenyloxy, acetamide, amino and aminoxy groups, with the ketoxime, alkoxy and alkenyloxy groups being preferred. Herein, the partial hydrolytic condensate refers to an organosiloxane oligomer which is produced by partial hydrolysis and condensation of a hydrolyzable organosilane compound such that at least 2, preferably at least 3 hydrolyzable groups are left therein. Also, component (C) is different not only from the foregoing component (A), but also from component (F) to be described later.

The preferred hydrolyzable organosilane compound is a compound having the general formula (10):

R⁵_{b}SiY'_{4-b} (10)

wherein R⁵ is each independently a C₁-C₁₂ unsubstituted monovalent hydrocarbon group, Y' is independently a hydrolyzable group, and b is an integer of 0 to 3, preferably 1 to 3, more preferably 1 or 2.

In formula (10), examples of the C₁-C₁₂ unsubstituted monovalent hydrocarbon group R⁵ include alkyl groups such as methyl, ethyl, propyl, isopropyl, butyl, isobutyl, tert-butyl, pentyl, hexyl, heptyl, octyl, nonyl, decyl and dodecyl; cycloalkyl groups such as cyclopentyl and cyclohexyl; alkenyl groups such as vinyl, allyl, butenyl, pentenyl and hexenyl; aryl groups such as phenyl, tolyl, xylyl, α-naphthyl and β-naphthyl; and aralkyl groups such as benzyl, 2-phenylethyl and 3-phenylpropyl. Inter alia, alkyl groups such as methyl and ethyl and alkenyl groups such as vinyl are preferred, with methyl and vinyl being especially preferred.

In formula (10), examples of the hydrolyzable group Y' include alkoxy groups such as methoxy, ethoxy, propoxy, isopropoxy, butoxy, isobutoxy and tert-butoxy, alkenyloxy groups such as vinyloxy, allyloxy, propenoxy, isopropenoxy, and (cyclopent-1-en-1-yl)oxy, ketoxime groups such as dimethylketoxime, diethylketoxime, methylethylketoxime, and methylisobutylketoxime, acyloxy groups such as acetoxy, acetamide groups such as N-methylacetamide and N-ethylacetamide, hydroxyl groups such as diethylhydroxyl, and amino groups such as butylamino. Inter alia, ketoxime, alkoxy, aetoxy, and alkenyloxy groups are preferred, with the ketoxime, alkoxy, and alkenyloxy groups being more preferred.

Examples of component (C) include ketoxime-containing silanes such as methyltris(methylethylketoxime)silane, vinyltris(methylethylketoxime)silane, methyltris(methylisobutylketoxime)silane, and vinyltris(methylisobutylketoxime)silane, alkoxysilanes such as methyltrimethoxysilane, dimethyldimethoxysilane, vinyltrimethoxysilane, phenyltrimethoxysilane, and methyltriethoxysilane, and silyl enol ethers such as methyltriisopropenoxysilane, vinyltriisopropenoxysilane, phenyltriisopropenoxysilane, and methyltris[(cyclopent-1-en-1-yl)oxy]silane, vinyltris[(cyclopent-1-en-1-yl)oxy]silane, and phenyltris[(cyclopent-1-en-1-yl)oxy]silane as well as partial hydrolytic condensates thereof. They may be used alone or in admixture.

The amount of component (C) blended is preferably 0.1 to 30 parts by weight, more preferably 0.2 to 20 parts by weight, even more preferably 0.5 to 15 parts by weight per 100 parts by weight of component (B). With an amount of less than 0.1 part by weight, the composition is less curable. An amount in excess of 30 parts by weight may give rise to the problem that cured products are too hard and bring an economical loss.

Component (D) is a curing catalyst or condensation reaction catalyst, which is used to help cure the composition. Suitable curing catalysts include alkyl tin esters such as dibutyltin diacetate, dibutyltin dilaurate, dibutyltin dioctoate, and dioctyltin dilaurate, titanate esters or titanium chelates such as tetraisopropoxytitanium, tetra-n-butoxytitanium, tetrakis(2-ethylhexoxy)titanium, dipropoxybis(acetylacetonato)titanium, and titanium isopropoxyoctylene glycol, oganometallic compounds such as zinc naphthenate, zinc stearate, zinc 2-ethyloctoate, iron 2-ethylhexoate, cobalt 2-ethylhexoate, manganese 2-ethylhexoate, cobalt naphthenate, alkoxy aluminum compounds, and aluminum chelates, amine compounds and salts thereof such as hexylamine and dodecylamine phosphate, quaternary ammonium salts such as benzyltriethylammonium acetate, alkali metal salts of lower fatty acids such as potassium acetate, sodium acetate, and lithium oxalate, dialkylhydroxylamines such as dimethylhydroxylamine and diethylhydroxylamine, silanes or siloxanes containing a guanidyl group such as tetramethylguanidyl propyltrimethoxysilane, tetramethylguanidyl propylmethyldimethoxysilane, and tetramethylguanidyl propyltris(trimethylsiloxy)silane, and silanes or siloxanes containing a phosphazene base such as N,N,N',N',N",N"-hexamethyl-N"'-[3-(trimethoxysilyl)propyl]-phospholimidic triamide. They may be used alone or in admixture.

The amount of the curing catalyst blended as component (D) is preferably 0.01 to 15 parts by weight, more preferably 0.01 to 5 parts by weight per 100 parts by weight of component (B). If the amount of component (D) is too small, a sufficient curing rate may not be obtained. If the amount is too large, the curing rate is too fast to ensure satisfactory workability.

Component (E) is a filler which is blended if necessary, and used to provide a cured product of the composition with sufficient mechanical strength. Any of well-known fillers may be used. Examples include silica powders which have been or have not been surface-treated (i.e., hydrophilic or hydrophobic), e.g., dry silicas such as fused silica, fired silica, fumed silica, and silica aerogel, wet silicas such as precipitated silica and sol-gel silica, and diatomaceous earth, metal oxides such as iron oxide, zinc oxide and titanium oxide, or these metal oxides whose surface has been subjected to hydrophobic treatment with silane compounds, calcium carbonates such as colloidal calcium carbonate and heavy calcium carbonate, metal carbonate salts such as magnesium carbonate and zinc carbonate, inorganic fillers such as asbestos, glass wool, carbon black and powdered mica, and powdered synthetic resins such as polystyrene, polyvinyl chloride and polypropylene, which may be used alone or in admixture.

When component (E) is blended, its amount is preferably 1 to 1,000 parts by weight, more preferably 1 to 400 parts by weight, even more preferably 5 to 200 parts by weight per 100 parts by weight of component (B). If the amount is less than 1 part by weight, there is a tendency that a cured product of the composition does not exhibit sufficient mechanical strength. If more than 1,000 parts by weight of component (E) is used, there is a tendency that the composition undergoes a viscosity buildup to detract from workability and the cured product loses rubber strength, failing to gain rubber elasticity.

Component (F) is an adhesion promoter which is blended if necessary. Silane coupling agents are typically used as the adhesion promoter, for example, hydrolyzable organosilane compounds containing a monovalent hydrocarbon group (i.e., so-called carbon functional group) having a functionality such as (meth)acryloxy functionality, epoxy functionality, amino functionality exclusive of guanidyl, mercapto functionality, isocyanate functionality, or halogen, and partial hydrolytic condensates thereof. Specifically, it is preferred to blend one or more compounds selected from aminosilanes such as 3-aminopropyltriethoxysilane and 3-(2-aminoethylamino)propyltrimethoxysilane (also named, N-2-(aminoethyl)-3-aminopropyltrimethoxysilane), epoxysilanes such as γ-glycidoxypropyltrimethoxysilane and β-(3,4-epoxycyclohexyl)ethyltrimethoxysilane, and isocyanate silanes such as γ-isocyanatopropyltriethoxysilane, which may be used alone or in admixture.

When component (F) is blended, the amount of the adhesion promoter is preferably 0.1 to 30 parts by weight, more preferably 0.2 to 10 parts by weight per 100 parts by weight of component (B). If the amount is too small, the resulting cured product is less adhesive. If the amount is too large, the composition may be under-cured.

Component (G) is a plasticizer which is blended, if necessary, for adjusting the viscosity of the composition such that the composition may be easy to handle on application, without detracting from the mechanical properties and flame retardance of a cured product of the composition.

Examples of the plasticizer used in the RT-curable resin composition include dimethyl phthalate (DMP), diethyl phthalate (DEP), di-n-butyl phthalate (DBP), diheptyl phthalate (DHP), dioctyl phthalate (DOP), diisononyl phthalate (DINP), diisodecyl phthalate (DIDP), ditridecyl phthalate (DTDP), butylbenzyl phthalate (BBP), dicyclohexyl phthalate (DCHP), tetrahydrophthalate esters, dioctyl adipate (DOA), diisononyl adipate (DINA), diisodecyl adipate (DIDA), di-n-alkyl adipates, dibutyl diglycol adipate (BXA), bis(2-ethylhexyl) azelate (DOZ), dibutyl sebacate (DBS), dioctyl sebacate (DOS), dibutyl maleate (DBM), di-2-ethylhexyl maleate (DOM), dibutyl fumarate (DBF), tricresyl phosphate (TCP), triethyl phosphate (TEP), tributyl phosphate (TBP), tris(2-ethylhexyl) phosphate (TOP), tri(chloroethyl) phosphate (TCEP), trisdichloropropyl phosphate (CPP), tributoxyethyl phosphate (TBXP), tris(β-chloropropyl) phosphate (TMCPP), triphenyl phosphate (TPP), octyldiphenyl phosphate (ODP), acetyltriethyl citrate, tributyl acetylcitrate, trimellitic plasticizers, polyester plasticizers, chlorinated paraffins, stearic plasticizers; silicone oils (or nonfunctional organopolysiloxanes) such as dimethylpolysiloxane; and petroleum based high-boiling solvents such as polyoxypropylene glycol, paraffin, naphthene and isoparaffin based solvents. They may be used alone or in admixture. Inter alia, silicone oils are most preferred.

As the silicone oil (or nonfunctional organopolysiloxane), an organopolysiloxane having the general formula (11) may be used. 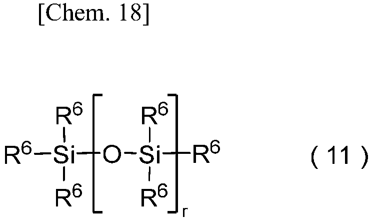 Herein R⁶ is independently a C₁-C₂₀ substituted or unsubstituted monovalent hydrocarbon group free of an aliphatic unsaturated bond, and r is such a number that the organopolysiloxane may have a viscosity at 23°C of 1.5 to 1,000,000 mPa·s.

In formula (11), R⁶ is independently a C₁-C₂₀ substituted or unsubstituted, monovalent hydrocarbon group free of an aliphatic unsaturated bond, examples of which include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and the foregoing groups in which some or all hydrogen is substituted by halogen (e.g., F, Cl or Br) such as chloromethyl, chloropropyl, bromoethyl, and trifluoropropyl.

The organopolysiloxane having formula (11) should preferably have a viscosity at 23°C of 1.5 to 1,000,000 mPa·s, more preferably 10 to 100,000 mPa·s. If the viscosity of the organopolysiloxane is less than 1.5 mPa·s, the cured product may be degraded in mechanical properties and flame retardance. If the viscosity exceeds 1,000,000 mPa·s, the composition may have a viscosity which is awkward to handle upon application and hence, lose workability.

In the organopolysiloxane having formula (11), r indicative of the number of repeating diorganosiloxane units (i.e., degree of polymerization) is typically a number of about 3 to 3,000, preferably about 5 to 2,000, more preferably about 10 to 1,000.

When component (G) is blended, its amount is preferably 1 to 1,000 parts by weight, more preferably 2 to 500 parts by weight, even more preferably 5 to 200 parts by weight per 100 parts by weight of component (B). As long as the amount of component (G) is in the range, the viscosity of the RT-curable resin composition can be adjusted such that the composition may be easy to handle upon application without detracting from the mechanical properties and flame retardance of the composition.

### [Other components]

Besides components (A) to (G), any well-known additives may be blended in the RT-curable resin composition as long as the object of the invention is not impaired. Suitable additives include pigments, dyes, anti-aging agents, antistatic agents, antioxidants such as iron oxide, and flame retardants such as antimony oxide and chlorinated paraffins. Further, thixotropic agents such as polyethers, mildewproofing agents, and antibacterial agents may be blended.

In the RT-curable resin composition, an organic solvent may be used if necessary. Exemplary organic solvents include aliphatic hydrocarbon compounds such as n-hexane, n-heptane, isooctane, and isododecane; aromatic hydrocarbon compounds such as toluene and xylene; chainlike siloxanes such as hexamethyldisiloxane, octamethyltrisiloxane, decamethyltetrasiloxane, dodecamethylpentasiloxane, and 2-(trimethylsiloxy)-1,1,1,2,3,3,3-heptamethyltrisiloxane; and cyclic siloxanes such as octamethylcyclopentasiloxane and decamethylcyclopentasiloxane. The amount of the organic solvent may be properly adjusted as long as the benefits of the invention are not impaired.

The RT-curable resin composition may be prepared, for example, by mixing the foregoing components (A) to (D), optionally components (E) to (G) and other components in the standard way until uniform.

The resulting RT-curable resin composition cures while it is allowed to stand at RT (23°C±10°C). With respect to the molding method and curing conditions, a choice may be made among well-known methods and conditions depending on a particular composition. For example, the composition cures while it is held in air under conditions of 23°C and 50% RH for several hours to several days (specifically 6 hours to 7 days).

The RT-curable resin composition can be cured in a short time and after curing, has a satisfactory bond strength.

Since a cured product of the RT-curable resin composition has satisfactory flexibility and rubber elasticity, it is useful as coating agents, adhesive agents, and sealing agents (e.g., sealants for buildings). The method of using the RT-curable resin composition as coating agents, adhesive agents, or sealing agents is not particularly limited and may be in accord with any well-known method.

Examples of an article having a coating layer in the form of a cured product of the RT-curable resin composition include articles of glass, resin and metal materials. The material and shape of the substrate are not particularly limited.

The strength of the cured product of the RT-curable resin composition encompasses hardness, tensile strength and tensile shear bond strength which can be measured according to the test method of JIS K-6249.

### EXAMPLES

Synthesis Examples, Examples and Comparative Examples are shown below for illustrating the invention although the invention is not limited thereto. In Examples, the molecular weight is a number average molecular weight (Mn) measured by GPC versus polystyrene standards using toluene as developing solvent; properties are measured at 23°C, "parts" are by weight, and the viscosity is measured at 23°C by a rotational viscometer.

### Synthesis of organosilicon compounds

### [Synthesis Example 1]

### Synthesis of Organosilicon Compound 1

A 500-mL separable flask equipped with a stirrer, reflux condenser, dropping funnel and thermometer was charged with 34.4 g (0.1 mol, alkenyl group amount 0.4 mol) of 1,3,5,7-tetramethyl-1,3,5,7-tetravinylcyclotetrasiloxane, 0.15 g (platinum amount 6.8×10⁻⁶ mol) of a toluene solution of platinum/1,3-divinyl-1,1,3,3-tetramethyldisiloxane complex, and 50 g of toluene, and heated at 80°C. 119.5 g (0.4 mol, SiH group amount 0.4 mol) of an organopolysiloxane having a silicon-bonded hydrogen (i.e., SiH group) at one end of the molecular chain and a silanol group (i.e., silicon-bonded hydroxy group) at the other end, represented by the following formula (12), was added dropwise to the solution, which was heated and stirred at 80°C for 3 hours. The reaction was considered completed when it was confirmed by gas chromatography that the peaks assigned to the organopolysiloxane having a silicon-bonded hydrogen at one end of the molecular chain completely disappeared. This was followed by vacuum distillation (120°C, 5 mmHg) for 2 hours and filtration, obtaining 151.4 g of Organosilicon Compound 1 having a Mn of 1,571, represented by the following formula (13).

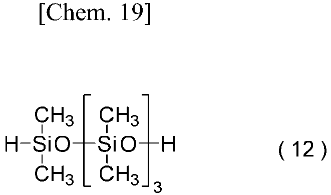

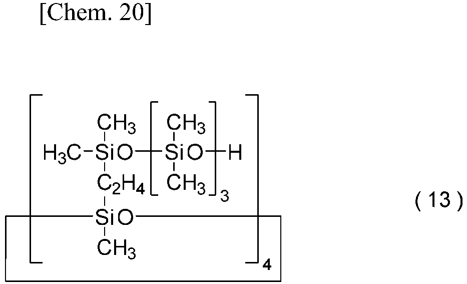

### [Synthesis Example 2]

### Synthesis of Organosilicon Compound 2

A 500-mL separable flask equipped with a stirrer, reflux condenser, dropping funnel and thermometer was charged with 40.8 g (0.4 mol, alkenyl group amount 0.4 mol) of vinyl(dimethyl)hydroxysilane, represented by the following formula (14), 0.15 g (platinum amount 6.8×10⁻⁶ mol) of a toluene solution of platinum/1,3-divinyl-1,1,3,3-tetramethyldisiloxane complex, and 50 g of toluene, and heated at 80°C. 24.1 g (0.1 mol, SiH group amount 0.4 mol) of 1,3,5,7-tetramethyl-1,3,5,7-tetrahydrogencyclotetrasiloxane was added dropwise to the solution, which was heated and stirred at 80°C for 3 hours. The reaction was considered completed when it was confirmed by gas chromatography that the peaks assigned to the organopolysiloxane having an alkenyl group completely disappeared. This was followed by vacuum distillation (120°C, 5 mmHg) for 2 hours and filtration, obtaining 64.3 g of Organosilicon Compound 2 having a Mn of 651, represented by the following formula (15).

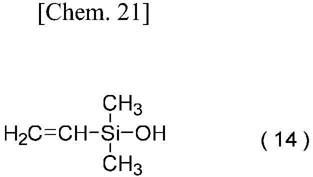

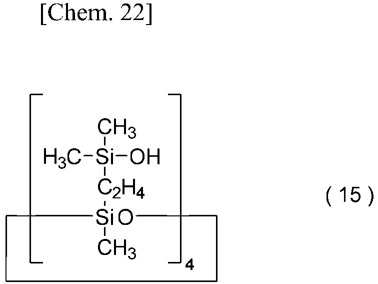

### [Example 1]

Composition 1 was prepared by adding 70 parts of a linear dimethylpolysiloxane capped with a silanol group at both ends of the molecular chain, having a viscosity of 20,000 mPa·s, and corresponding to formula (6) wherein R⁴=methyl, X=oxygen, and p=~620, 15 parts of a linear dimethylpolysiloxane (or nonfunctional dimethylpolysiloxane) capped with a trimethylsilyl group at both ends of the molecular chain and having a viscosity of 100 mPa·s as plasticizer, 3 parts of Organosilicon Compound 1, and 10 parts of fumed silica, mixing under reduced pressure for 30 minutes, then adding 5 parts of methyltris(methylethylketoxime)silane, 3 parts of vinyltris(methylethylketoxime)silane, 0.05 part of dioctyltin dilaurate, and 1 part of 3-aminopropyltriethoxysilane (KBE-903, Shin-Etsu Chemical Co., Ltd.) as adhesion promoter, and mixing again under reduced pressure until uniform.

### [Example 2]

Composition 2 was prepared as in Example 1 aside from adding 2 parts of Organosilicon Compound 2 instead of Organosilicon Compound 1.

### [Comparative Example 1]

Composition 3 was prepared as in Example 1 aside from omitting Organosilicon Compound 1.

### [Example 3]

Composition 4 was prepared by adding 90 parts of a linear dimethylpolysiloxane capped with a silanol group at both ends of the molecular chain, having a viscosity of 20,000 mPa·s, and corresponding to formula (6) wherein R⁴=methyl, X=oxygen, and p=~620, 15 parts of a linear dimethylpolysiloxane (or nonfunctional dimethylpolysiloxane) capped with a trimethylsilyl group at both ends of the molecular chain and having a viscosity of 100 mPa·s as plasticizer, 3 parts of Organosilicon Compound 1, 50 parts of colloidal calcium carbonate, and 50 parts of heavy calcium carbonate, mixing under reduced pressure for 30 minutes, then adding 10 parts of vinyltriisopropenoxysilane, 0.5 part of tetramethylguanidylpropyltrimethoxysilane, and 0.5 part of N-2-(aminoethyl)-3-aminopropyltrimethoxysilane (KBM-603, Shin-Etsu Chemical Co., Ltd.) as adhesion promoter, and mixing again under reduced pressure until uniform.

### [Example 4]

Composition 5 was prepared as in Example 3 aside from adding 2 parts of Organosilicon Compound 2 instead of Organosilicon Compound 1.

### [Comparative Example 2]

Composition 6 was prepared as in Example 3 aside from omitting Organosilicon Compound 1.

### (Test)

### [Sheet physical properties]

Each of the RT-curable resin compositions of Examples 1 to 4 and Comparative Examples 1 and 2 immediately after preparation was shaped into a sheet of 2 mm thick and exposed to an atmosphere of 23°C and 50% RH. The sheet was then allowed to stand in the same atmosphere for 7 days for curing. The physical properties (hardness and tensile strength) of the cured product were measured according to JIS K-6249. Notably, the hardness was measured by a Durometer A hardness meter of JIS K-6249. The results are shown in Tables 1 and 2.

### [Shear bond test]

Each of the RT-curable resin compositions of Examples 1 to 4 and Comparative Examples 1 and 2 immediately after preparation was sandwiched between two aluminum plates (adherends) of 25 mm wide and 100 mm long and cured at 23°C and 50% RH for 7 days, obtaining a shear bond specimen having a bond area of 2.5 mm² and a bond thickness of 1 mm. The specimen was measured for shear bond strength according to JIS K-6249. The results are shown in Tables 1 and 2.

**[Table 1]**

| | Example 1 | Example 2 | Comparative Example 1 |
|---|---|---|---|
| | Composition 1 | Composition 2 | Composition 3 |
| Hardness Type A | 34 | 35 | 29 |
| Tensile strength (MPa) | 2.2 | 2.4 | 1.6 |
| Shear bond strength (MPa) | 1.8 | 2.0 | 1.3 |

**[Table 2]**

| | Example 3 | Example 4 | Comparative Example 2 |
|---|---|---|---|
| | Composition 4 | Composition 5 | Composition 6 |
| Hardness Type A | 41 | 42 | 35 |
| Tensile strength (MPa) | 2.0 | 2.1 | 1.5 |
| Shear bond strength (MPa) | 1.5 | 1.4 | 1.0 |

As seen from the results in Tables 1 and 2, the cured products (i.e., cured silicone rubbers) of the RT-curable resin compositions prepared in Examples 1 to 4 were elastomeric cured products (i.e., rubber elastomers) having excellent mechanical properties (rubber hardness, tensile strength and shear bond strength), especially having superior tensile strength and shear bond strength to the cured products of the RT-curable resin compositions prepared in Comparative Examples 1 and 2.

## Claims

1. A RT-curable resin composition comprising an organosilicon compound having the formula (1): 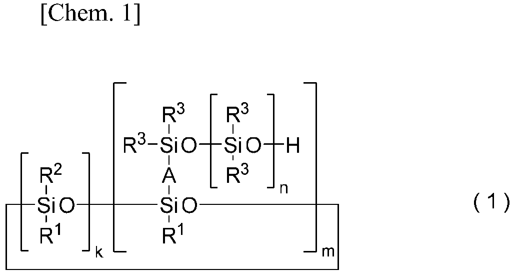 wherein R¹ is independently a C₁-C₁₂ substituted or unsubstituted, monovalent hydrocarbon group free of an aliphatic unsaturated bond, R² is hydrogen or a C₂-C₁₂ aliphatic unsaturated monovalent hydrocarbon group, R³ is independently a C₁-C₁₂ substituted or unsubstituted, monovalent hydrocarbon group free of an aliphatic unsaturated bond, A is a C₂-C₈ divalent hydrocarbon group, k is an integer of 0 to 2, m is an integer of 3 to 6, k+m is an integer of 3 to 8, and n is an integer of 0 to 100.

2. The RT-curable resin composition of claim 1, comprising a curable organopolysiloxane.

3. The RT-curable resin composition of claim 2, comprising the following components (A) to (D):
(A) 0.01 to 50 parts by weight of the organosilicon compound having formula (1),
(B) 100 parts by weight of a curable organopolysiloxane,
(C) 0.1 to 30 parts by weight of a hydrolyzable organosilane compound and/or a partial hydrolytic condensate thereof, other than components (A) and (B), and
(D) 0.01 to 15 parts by weight of a curing catalyst.

4. The RT-curable resin composition of claim 3, further comprising, per 100 parts by weight of component (B), at least one component selected from the following components (E) to (G):
(E) 1 to 1,000 parts by weight of a filler,
(F) 1 to 30 parts by weight of an adhesion promoter, and
(G) 1 to 1,000 parts by weight of a plasticizer.

5. A coating agent comprising the RT-curable resin composition of any one of claims 1 to 4.

6. An adhesive agent comprising the RT-curable resin composition of any one of claims 1 to 4.

7. A sealing agent comprising the RT-curable resin composition of any one of claims 1 to 4.

8. An article having a coating layer comprising a cured product of the RT-curable resin composition of any one of claims 1 to 4.

9. An article bonded and/or sealed with a cured product of the RT-curable resin composition of any one of claims 1 to 4.
